Europäisches Patentamt

European Patent Office

Office européen des brevets

(11) Veröffentlichungsnummer: **0 219 851**
**A2**

(12) # EUROPÄISCHE PATENTANMELDUNG

(21) Anmeldenummer: 86114556.3

(22) Anmeldetag: 21.10.86

(51) Int. Cl.⁴: **A47J 31/40** , B67D 1/00

(30) Priorität: 22.10.85 DE 3537576

(43) Veröffentlichungstag der Anmeldung:
29.04.87 Patentblatt 87/18

(84) Benannte Vertragsstaaten:
AT CH DE FR LI NL

(71) Anmelder: **Kirstein, Fritz Ulrich**
**Grünwalderstrasse 177a**
**D-8000 München 90(DE)**
Anmelder: **Schropp, Peter**
**Eichbergweg 9**
**D-8980 Kempten(DE)**

(72) Erfinder: **Kirstein, Fritz Ulrich**
**Grünwalderstrasse 177a**
**D-8000 München 90(DE)**
Erfinder: **Schropp, Peter**
**Eichbergweg 9**
**D-8980 Kempten(DE)**

(74) Vertreter: **Haft, Berngruber, Czybulka**
**Hans-Sachs-Strasse 5**
**D-8000 München 5(DE)**

(54) **Vorrichtung zur Zubereitung von Getränken.**

(57) Eine Vorrichtung zur Zubereitung von Getränken weist mehrere Vorratsbehälter (4 bis 7) zum Zuteilen einer bestimmten Menge eines Sirups als Zutat zu dem Getränk auf. Jede Sirupzuteileinrichtung weist dabei im Boden (16) des betreffenden Sirupvorratsbehälters (4 bis 7) eine Ausnehmung (17) als Dosierkammer auf, in der ein manuell betätigbarer Kolben (20) verschiebbar angeordnet ist, wobei sich von der Ausnehmung (17) ein Ablaufkanal (18) nach unten zur Abgabe des Sirups an das zum Zubereiten des Getränks verwendete Gefäß (12) erstreckt.

FIG. 2

EP 0 219 851 A2

## Vorrichtung zur Zubereitung von Getränken

Die Erfindung bezieht sich auf eine Vorrichtung zur Zubereitung von Getränken mit mindestens einer Zuteileinrichtung für eine bestimmte Menge einer Flüssigkeit, insbesondere eines Sirups, als Zutat zu dem Getränk, wobei die Zuteileinrichtung eine Dosierkammer mit einem Ablaufkanal am Boden eines Flüssigkeitsvorratsbehälters aufweist.

Aus der DE-PS 24 36 715 ist eine Kaffeemaschine mit einer Zuteileinrichtung für Wasser bekannt, bei der am Boden eines Wasserbehälters, getrennt über eine Zwischenwand, eine Dosierkammer vorgesehen ist. Der Ablaufkanal von der Dosierkammer ist dabei mit einem Durchlauferhitzer verbunden, von dem ein Steigrohr zu einem Filtergefäß führt. Der Wasserbehälter ist mit der Dosierkammer über ein Ventil in der Zwischenwand verbindbar. Die bekannte Zuteileinrichtung ist für einen Sirup ungeeignet.

Aus der DE-OS 30 45 254 ist eine Zuteileinrichtung für einen Sirup bekannt, wobei mehrere Sirupbehälter mit unterschiedlichen Geschmacksrichtungen vorgesehen sind. Die erforderliche Sirupmenge wird dabei aus dem jeweiligen Behälter über eine Pumpe angesaugt und einem Ventilblock zugeführt, wo sie mit Wasser vermischt wird. Diese Zuteileinrichtung besitzt den Nachteil, daß sich z. B. die Saugleitungen und der Ventilblock bei längerem Nichtgebrauch zusetzen können. Auch wird der Ventilblock leicht verschmutzt, so daß unbeabsichtigt Flüssigkeit auslaufen kann.

Der Erfindung, wie sie in den Ansprüchen gekennzeichnet ist, liegt die Aufgabe zugrunde, eine einfach aufgebaute, funktionssichere und hygienische Getränkezubereitungsvorrichtung, insbesondere für Getränke, denen ein Sirup zugegeben wird, bereitzustellen.

Nachstehen ist die Erfindung anhand der beigefügten Zeichnung näher erläutert. Darin zeigen jeweils schematisch:

Figur 1 eine Vorderansicht einer Ausführungsform der erfindungsgemäßen Getränkezubereitungsvorrichtung;

Figur 2 einen Längsschnitt durch eine Ausführungsform eines der Sirupvorratsbehälter mit Zuteileinrichtung einer erfindungsgemäßen Vorrichtung;

Figur 3 eine Seitenansicht des oberen Teils des Vorratsbehälters nach Figur 2;

Figur 4 einen Längsschnitt durch den unteren Teil einer Ausführungsform eines Pulvervorratsbehälters mit einer Pulverzuteileinrichtung beim Befüllen desselben; und

Figur 5 einen Längsschnitt nach Figur 4 beim Entleeren der Pulverzuteileinrichtung.

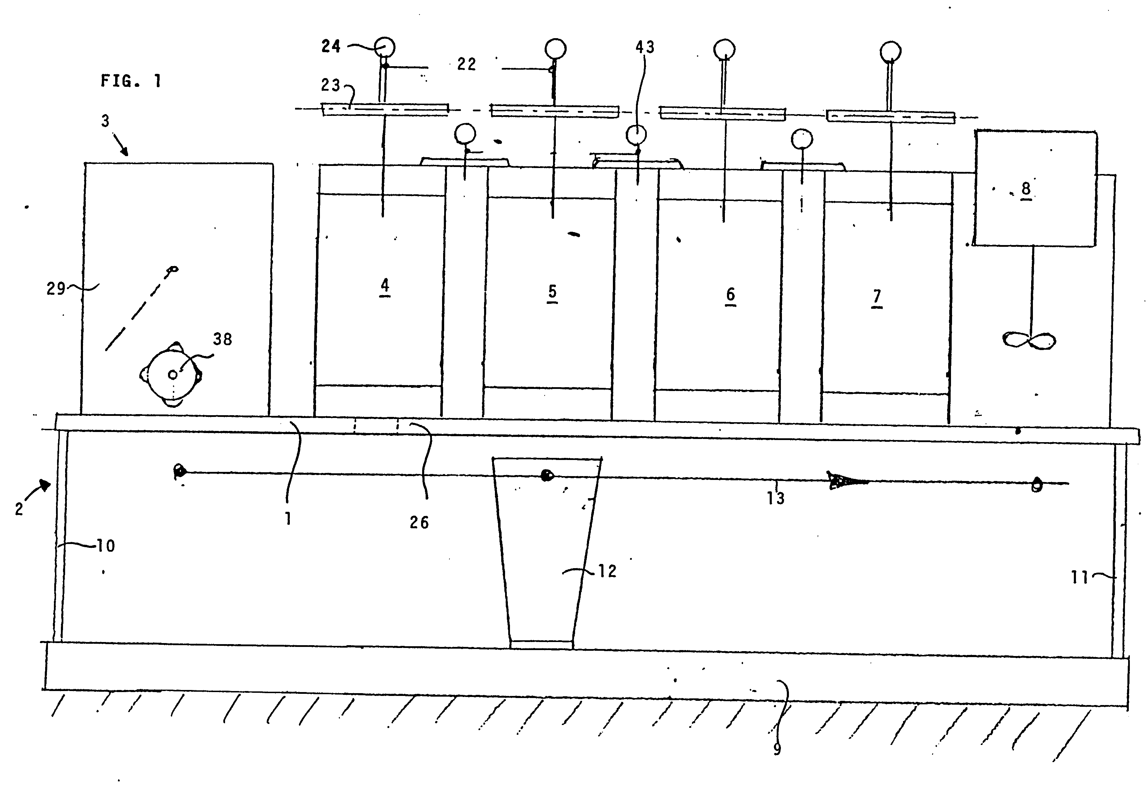

Gemäß Figur 1 sind auf der Tragplatte 1 eines Gestells 2 in einer Reihe von links nach rechts ein Pulvervorratsbehälter 3, vier Sirupvorratsbehälter 4 bis 7 und ei n Rührgerät 8 angeordnet.

Das Gestell 2 besteht dabei aus einer Grundplatte 9, der Tragplatte 1 und Stützen 10, 11 an beiden Enden, die die Grundplatte 9 und die Tragplatte 1 miteinander verbinden. Der Abstand zwischen der Grundplatte 9 und der darüber angeordneten Tragplatte 1 ist dabei größer als die Höhe des Bechers 12, der das Gefäß bildet, in dem das Getränk zubereitet wird.

Die in Figur 1 dargestellte Vorrichtung dient insbesondere zum Zubereiten von Getränken für Sportler. Dabei ist in dem Pulvervorratsbehälter 3 z. B. ein protein-, kohlehydrat-, mineralien-und/oder vitaminreiches Pulver enthalten. In den Sirupbehältern 4 bis 7 befinden sich Fruchtsaftkonzentrate unterschiedlichen Geschmacks, z. B. Erdbeersirup, Bananensirup usw.

Zur Zubereitung eines Getränks wird in den Becher 12 z. B. eine bestimmte Menge des Pulvers aus dem Pulvervorratsbehälter 3, eine bestimmte Menge eines Sirups aus einem der Sirupvorratsbehälter 4 bis 7 sowie eine Grundflüssigkeit, wie Milch oder Wasser, gegeben, worauf der Inhalt des Bechers 12 mit dem Rührgerät 8 vermischt wird. Die Grundflüssigkeit kann dabei nach der Zugabe des Pulvers und vor der Zugabe des Sirups erfolgen. Der Becher 12 wird dabei auf der Grundplatte 9 entlang dem Pfeil 13 von dem Pulvervorratsbehälter 3 zum Rührgerät 8 geschoben, welches z. B. durch einen Stabmixer gebildet wird.

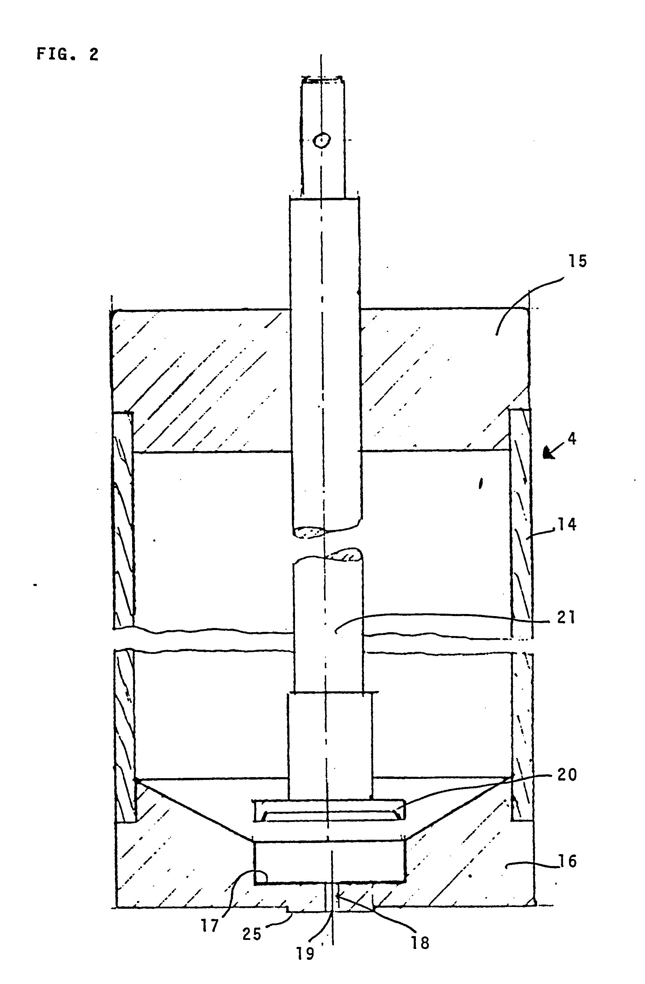

Die Sirupvorratsbehälter 4 bis 7 sind identisch aufgebaut. Demgemäß wird anhand der Figur 2 lediglich der. eine Sirupvorratsbehälter 4 näher erläutert. Der Sirupvorratsbehälter 4 weist eine zylindrische Umfangswad 14 auf, auf die mit Klemmsitz ein Deckel 15 und ein Boden 16 oben bzw. unten aufgesteckt sind. Die Umfangswand 14 kann dazu aus rostfreiem Stahl und der Deckel 15 sowie der Boden 16 aus einem Kunststoff bestehen, welcher gegenüber dem Sirup resistent ist. Die Steckverbindung zwischen der Umfangswand 4 und dem Boden 16 bzw. dem Deckel 15 hat den Vorteil, daß sie leicht zu reinigen ist. Das Fassungsvermögen des Vorratsbehälters 4 kann z. B. einen Liter betragen.

Im Boden 16 des Vorratsbehälters 4 ist in der Mitte auf der dem Behälterinneren zugewandten Seite eine zylindrische Ausnehmung 17 vorgesehen, die z. B. ein Volumen von 10 ml aufweist und die Dosierkammer der Sirupzuteileinrichtung bildet.

Vom Boden der Ausnehmung 17 erstreckt sich mittig ein als Düse ausgebildeter senkrechter Ablaufkanal 18 zur Ablauföffnung 19, aus der der Sirup austritt.

Weiterhin ist in der Ausnehmung 17 ein auf und ab beweglicher Kolben 20 verschiebbar angeordnet. Der Kolben 20 ist mit einer Kolbenstange 21 versehen, die sich vom Kolben 20 durch das Innere des Vorratsgefäßes 4 und den Deckel 15 nach außen erstreckt, wobei der Deckel 15 die Führung für die Kolbenstange 21 bildet.

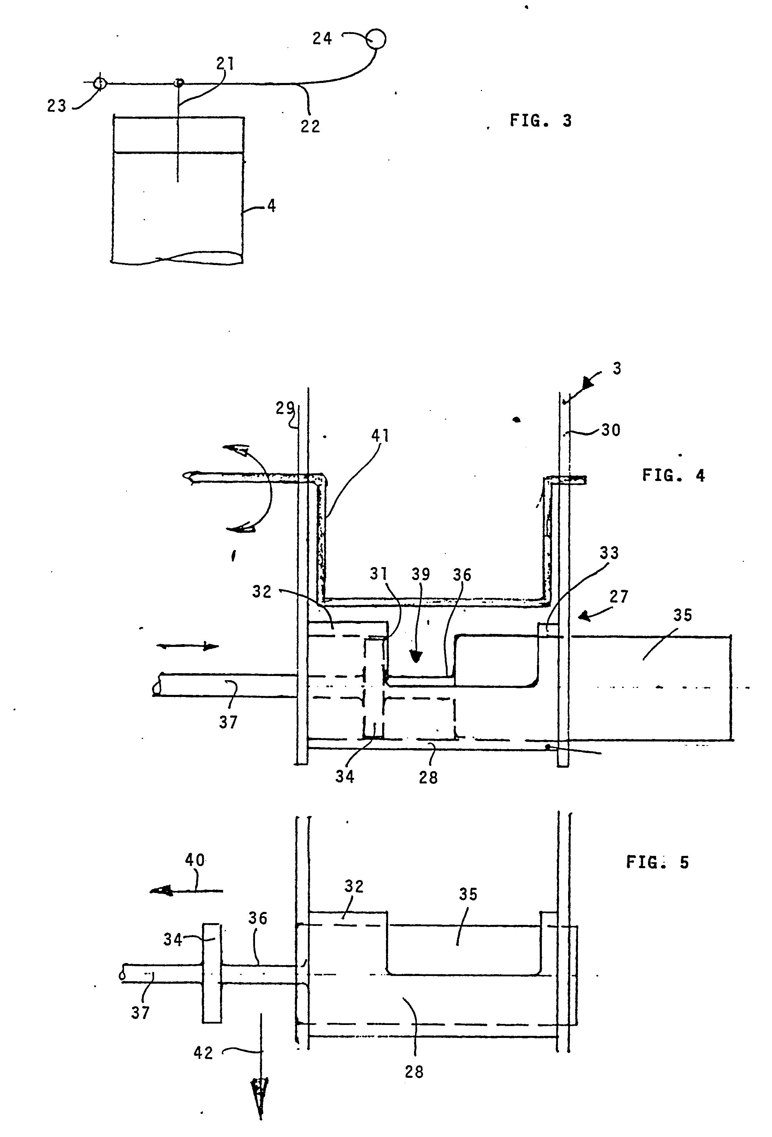

Wie aus Figur 1 und 3 ersichtlich, ist zur Betätigung des Kolbens 20 das obere Ende der Kolbenstange 21 an einem Hebel 22 angelenkt, welcher um eine an der hinteren Seite des Gestells 2 fest angeordnete Achse 23 verschwenkbar ist. An dem von der Schwenkachse 23 abgewandten Ende des Hebels 22 ist ein Handgriff 24 angeordnet. Durch Verschwenken des Hebels 23 nach oben wird damit der Kolben 20 aus der Ausnehmung 17 in die in Figur 2 dargestellt Position bewegt, so daß sich die Ausnehmung 17 bzw. Dosierkammer im Boden 16 des Vorratsbehälters 4 mit Sirup aus dem Inneren des Vorratsbehälters 4 füllt.

Der Innendurchmesser des Ablaufkanals ist dabei maximal so groß, daß bei gefülltem Vorratsbehälter 4 bei unbetätigtem Kolben 20 kein Sirup aus dem Ablaufkanal 18 austritt. Im allgemeinen beträgt der Innendurchmesser höchstens 3 mm, vorzugsweise höchstens 2 mm und mindestens 1 mm.

Bei Verschwenken des Hebels 22 nach unten, wird dann der in der Ausnehmung 17 enthaltene Sirup (z. B. 10 ml) durch den Ablaufkanal 18 gepreßt.

Auf diese Weise wird der Ablaufkanal 18 bei jedem Pumpvorgang gereinigt. Damit auch die sich aus dem Sirup absetzenden festen Stoffe abgegeben werden, läuft der Boden 16 auf der Behälterinnenseite von der Umfangswand 14 des Vorratsbehälters 4 zur Ausnehmung 17 trichterförmig zusammen. Gegenüber dem Stand der Technik kommt die erfindungsgemäße Sirupzuteileinrichtung also ohne Ansaugvorrichtung aus.

An der Unterseite des Bodens 16 des Vorratsbehälters 4 ist um die Ablauföffnung 19 ein ringförmiger Vorsprung 25 vorgesehen, der, wie in Figur 1 gestrichelt angedeutet ist, in eine kreisförige Durchbrechung 26 in der Tragplatte 1 des Gestells 2 einrastet, um den Vorratsbehälter 4 auf der Tragplatte 1 gegen Verschieben zu fixieren.

Gemäß Figur 4 und 5 ist der Pulvervorratsbehälter 3 am unteren Ende mit einer Zuteileinrichtung 27 versehen. Die Pulverzuteileinrichtung 27 weist einen waagrecht angeordneten Zylinder 28 auf, der die einander gegenüberliegenden Wände 29 und 30 des Vorratsbehälters 3 miteinander verbindet. Der Zylinder 28 weist an seiner Oberseite eine Öffnung 31 auf und beiderseits der Öffnung 31 Abschnitte 32 und 33, die jeweils an ihren beiden Enden offen sind.

Im Zylinder 28 sind zwei Kolben 34 und 35 verschiebbar angeordnet, die mit einer koaxial verlaufenden Stange 36 miteinander verbunden sind. Der eine der Vorderseite der Vorrichtung zugewandte Kolben 34 ist mit einer Betätigungsstange 37 verbunden, an deren freiem Ende ein Handgriff 38 (Figur 1) befestigt ist.

Die Länge der Öffnung 31 im Zylinder 28 ist größer als der Abstand der Kolben 34 und 35 voneinander. Ferner ist die Länge des von der Betätigungsstage 37 abgewandten Kolbens 35 größer als diejenige der Öffnung 31, so daß er bei der in Figur 5 dargestellten Position, bei der der andere Kolben 34 aus dem Vorratsbehälter 3 herausgezogen ist, die Öffnung 31 verschließt. Der Abschnitt 32 des Zylinders 28, in dem der herausziehbare Kolben 34 geführt ist, weist ferner eine Länge auf, die dem Abstand der Kolben 34 und 35 voneinander entspricht.

Auf diese Weise bildet der Raum 39 zwischen den beiden Kolben 34 und 35 um die Stange 36 die Dosierkammer der Pulverzuteileinrichtung 27. Der Raum 39 wird dabei über die Öffnung 31 mit Pulver aus dem Vorratsbehälter 3 gefüllt. Das Volumen des Raums 39 kann dabei z. B. 5 ml betragen.

Beim Herausziehen des Kolben 34 aus dem Zylinder 28 mit der Betätigungsstange 37 in Richtung des Pfeiles 40 wird der Raum 39 zunächst in den Abschnitt 32 des Zylinders 28 bewegt und dort von weiterer Pulverzufuhr abgeschnitten und alsdann aus dem Zylinder 29 herausgezogen, so daß das Pulver nach unten in Richtung des Pfeiles 42 in den dort bereitgestellten Becher 12 (Figur 1) fällt. Der Kolben 35 hat dabei das äußere Ende des Abschnitts 32 des Zylinders 28 erreicht, welches er verschließt. Zugleich verschließt er die Öffnung 31 im Zylinder 28.

Oberhalb der Öffnung 31 im Zylinder 28 befindet sich im Pulvervorratsbehälter 3 ein von außen betätigbarer, verschwenkbarer Bügel 41, mit dem eine Brückenbildung des Pulvers oberhalb der Öffnung 31 verhindert wird.

Zur Befestigung der Behälter 4 bis 7 ist auf den Deckeln 15 zweier benachbarter Behälter jeweils eine Platte 43 gelegt, durch die eine an der Tragplatte 1 befestigte Stange mit einem Gewinde ragt, auf die eine knopfförmige Mutter 49 aufgeschraubt ist.

Mit der erfindungsgemäßen Vorrichtung kann ein Getränk bestimmter Geschmacksrichtung durch Zugabe des entsprechenden Sirups frisch zubereitet werden. Dem trägt auch die Pulverzuteileinrichtung 27 Rechnung. Damit kann bakteriell gefährdetes Pulver hygienisch zu dosiert werden, im Gegensatz beispielsweise zu einem ohne Zwischenreinigung wiederverwendeten Löffel.

**Ansprüche**

1. Vorrichtung zur Zubereitung von Getränken mit mindestens einer Zuteileinrichtung für eine bestimmte Menge einer Flüssigkeit, insbesondere eines Sirups, als Zutat zu dem Getränk, wobei die Zuteileinrichtung eine Dosierkammer mit einem Ablaufkanal am Boden eines Flüssigkeitsvorratsbehälters aufweist, dadurch gekennzeichnet, daß die Dosierkammer durch eine Ausnehmung (17) im Boden (16) des Flüssigkeitsvorratsbehälters (4 bis 7) gebildet wird, in welcher ein Kolben (20) verschiebbar angeordnet ist.

2. Vorrichtung nach Anspruch 1, dadurch gekennzeichnet, daß der Kolben (20) in der Ausnehmung (17) auf und ab bewegbar angeordnet ist.

3. Vorrichtung nach Anspruch 2, dadurch gekennzeichnet, daß sich der Ablaufkanal (18) von der Ausnehmung (17) senkrecht nach unten zu einer Ablauföffnung (19) am Boden (16) erstreckt.

4. Vorrichtung nach Anspruch 1, dadurch gekennzeichnet, daß der Ablaufkanal (18) einen Innendurchmesser von höchstens 2 mm aufweist.

5. Vorrichtung nach einem der vorstehenden Ansprüche, dadurch gekennzeichnet, daß der Boden (16) an der Innenseite des Flüssigkeitsvorratsbehälters (4 -7) von der Umfangswand des Flüssigkeitsvorratsbehälters (4 -7) zu der Ausnehmung (17) trichterförmig zusammenläuft.

6. Vorrichtung nach einem der vorstehenden Ansprüche, dadurch gekennzeichnet, daß der Kolben (20) eine Kolbenstange (21) aufweist, die sich durch das Innere des Flüssigkeitsvorratsbehälters (4 -7) und dessen Deckel (15) erstrekt.

7. Vorrichtung nach Anspruch 6, dadurch gekennzeichnet, daß der Deckel (15) die Führung für die Kolbenstange (21) bildet.

8. Vorrichtung nach einem der vorstehenden Ansprüche, dadurch gekennzeichnet, daß der Kolben (20) über die Kolbenstange (21) manuell betätigbar ist.

9. Vorrichtung nach einem der Ansprüche 6 bis 8, dadurch gekennzeichnet, daß die Kolbenstange (21) an einem um eine feste Achse (23) verschwenkbaren Hebel (22) angelenkt ist.

10.Vorrichtung nach Anspruch 9, dadurch gekennzeichnet, daß der Hebel (22) an dem von seiner Schwenkachse (23) abgewandten Ende mit einem Handgriff (24) versehen ist.

11.Vorrichtung nach einem der vorstehenden Ansprüche, dadurch gekennzeichnet, daß der Boden (16) und/oder der Deckel (15) mittels einer Steckverbindung an der Umfangswand (14) des Flüssigkeitsvorratsbehälters (4 -7) befestigt ist.

12. Vorrichtung nach einem der vorstehenden Ansprüche, gekennzeichnet durch ein Gestell (2) mit einer Grundplatte (9) und einer die Flüssigkeitsvorratsbehälter (4 -7) aufnehmenden Tragplatte (1); welche in einem Abstand über der Grundplatte (9) angeordnet ist, der größer ist als die Höhe des Gefäßes (Becher 12), in dem das Getränk zubereitet wird.

13. Vorrichtung nach Anspruch 12, dadurch gekennzeichnet, daß an der Unterseite des Bodens des Flüssigkeitsvorratsbehälters (4 -7) ein Vorsprung (25) vorgesehen ist, der in eine Durchbrechung (26) in der Tragplatte (1) einrastbar ist.

14. Vorrichtung nach einem der vorstehenden Ansprüche, dadurch gekennzeichnet, daß neben der Flüssigkeitszuteileinrichtung eine Zuteileinrichtung (27) für eine bestimmte Menge eines Pulvers zu dem Getränk vorgesehen ist, wobei die Pulverzuteileinrichtung (27) am unteren Ende eines Pulver-Vorratsbehälters (3) vorgesehen ist, an einander gegenüberliegenden Wänden (29, 30) des Pulvervorratsbehälters (3) an der Innenseite unter Bildung einer Öffnung (31) zylindrische an beiden Enden offene Abschnitte (32, 33) aufweist, in denen zwei im Abstand voneinander angeordnete Kolben (34, 35) verschiebbar angeordnet sind, wobei die Länge der Öffnung (31) zwischen den zylindrischen Abschnitten (32, 33) mindestens so groß ist wie der Abstand der beiden Kolben (34, 35) voneinander und der eine Kolben (34) aus dem zugehörigen zylindrischen Abschnitt (32) nach außen herausziehbar ausgebildet ist.

15. Vorrichtung nach Anspruch 14, dadurch gekennzeichnet, daß bei herausgezogenem ersten Kolben (34) der zweite Kolben (35) am äußeren offenen Ende des zylindrischen Abschnitts (32) angeordnet ist, in dem der erste Kolben (34) geführt ist, wobei die Länge des zweiten Kolbens (35), derart ist, daß er bei herausgezogenem ersten Kolben (34) die Öffnung (31) zwischen den beiden zylindrischen Abschnitten (32 und 33) verschließt.

16. Vorrichtung nach Anspruch 14 oder 15, dadurch gekennzeichnet, daß der zylindrische Abschnitt (32), aus dem der erste Kolben (34) herausgezogen wird, eine Länge aufweist, die mindestens dem Abstand der beiden Kolben (34, 35) voneinander entspricht.

17. Vorrichtung nach einem der Ansprüche 14 bis 16, dadurch gekennzeichnet, daß die beiden zylindrischen Abschnitte (32, 33) durch einen Zylinder (28) gebildet werden, an dessen Oberseite die Öffnung (31) vorgesehen ist.

18. Vorrichtung nach einem der Ansprüche 14 bis 17, dadurch gekennzeichnet, daß die beiden Kolben (34, 35) durch eine Stange (36) miteinander verbunden sind.

19. Vorrichtung nach einem der Ansprüche 14 bis 18, dadurch gekennzeichnet, daß ein von außen betätigbarer verschwenkbarer Bügel (41) zur Verhinderung einer Brückenbildung im Pulvervorratsbehälter (3) oberhalb der Öffnung (31) angeordnet ist.

FIG. 1

0 219 851

FIG. 2

FIG. 3

FIG. 4

FIG. 5